Europäisches Patentamt

European Patent Office

Office européen des brevets

(19)

(11) Veröffentlichungsnummer : **0 087 834**
**B1**

(12) **EUROPÄISCHE PATENTSCHRIFT**

(45) Veröffentlichungstag der Patentschrift :
08.07.87

(21) Anmeldenummer : **83200241.4**

(22) Anmeldetag : **17.02.83**

(51) Int. Cl.⁴ : **F 04 F 11/02, F 02 B 33/42**

(54) Druckwellenlader mit Wälzlagerung des Rotors.

(30) Priorität : 03.03.82 CH 1293/82

(43) Veröffentlichungstag der Anmeldung :
07.09.83 Patentblatt 83/36

(45) Bekanntmachung des Hinweises auf die Patenterteilung : 08.07.87 Patentblatt 87/28

(84) Benannte Vertragsstaaten :
**AT CH DE FR GB IT LI SE**

(56) Entgegenhaltungen :
**CH-A- 398 185**
**GB-A- 680 358**
**GB-A- 1 125 472**
**US-A- 2 970 745**

(73) Patentinhaber : **BBC Aktiengesellschaft Brown, Boveri & Cie.**
**Haselstrasse**
**CH-5401 Baden (CH)**

(72) Erfinder : **Mayer, Andreas**
**Fohrhölzlistrasse 14b**
**CH-5443 Niederrohrdorf (CH)**
Erfinder : **Niederer, Adolf**
**Rankacher 179**
**CH-5424 Unterehrendingen (CH)**

EP 0 087 834 B1

## Beschreibung

Die vorliegende Erfindung betrifft einen Druckwellenlader mit Wälzlagerung des Rotors nach dem Oberbegriff des Patentanspruchs 1.

Die Rotoren der bei Verbrennungsmotoren praktisch eingesetzten Druckwellenlader sind durchwegs in Gleitlagern gelagert. Diese Gleitlager werden vom Schmierölsystem des Motors mit Oel versorgt. Wegen der hohen Drehzahl des Rotors würde die Lagerung bei einer Unterbrechung der Schmierölzufuhr, z. B. infolge eines Leitungsbruches, sehr schnell zerstört werden, was ein Betriebssicherheitsrisiko darstellt. Wegen der gegenüber Wälzlagern erheblich grösseren Lagerreibung ist auch die Antriebsleistung höher, was sich in einem höheren Kraftstoffverbrauch auswirkt. Da das Schmieröl nicht in die dem Druckaustausch zwischen Ansaugluft und Abgas dienenden Rotorzellen gelangen darf, sind Berührungsdichtungen vorgesehen, die aber die erforderliche Antriebsleistung zusätzlich erhöhen und ebenfalls eine Störungsquelle bilden. Solche Dichtungen haben auch die Aufgabe, russhaltiges Abgas, wie es bei Dieselmotoren im Leerlauf, bei Teillast und bei Laständerungen auftritt, von den Lagern fernzuhalten.

Zur genauen axialen Positionierung der Rotorwelle gegenüber dem Luft- und dem Gasgehäuse, die zur Einhaltung möglichst kleiner axialer Laufspiele zwischen den Rotorstirnflächen und den Stirnflächen der erwähnten Gehäuse wichtig ist, müssen Gleitlagerungen ein Kammlager aufweisen. Um ein Blockieren desselben zu vermeiden, muss aber ein gewisses, relativ grosses Kammlagerspiel eingehalten werden, so dass dem besagten Laufspiel von daher untere Grenzen gesetzt sind, die man zwecks Verringerung der Leckverluste lieber noch unterschreiten würde.

Durch die Verwendung von Wälzlagern mit Lebensdauerfettschmierung lässt sich die erforderliche Antriebsleistung um über die Hälfte reduzieren und der Wegfall der Oelumlaufschmierung schaltet die Gefahr von Betriebsstörungen durch Unterbrechung der Oelzufuhr aus. Darüber hinaus zeichnen sich Wälzlager durch hohe Tragfähigkeit aus und das axiale Lagerspiel lässt sich durch eine federnde Vorspannung kompensieren, ohne dass sich dadurch, im Gegensatz zu Gleitlagern, die Lagerreibung wesentlich erhöht. Ein wirtschaftlicher Vorteil der Wälzlagerung ergibt sich aus den niedrigeren Herstellungskosten infolge Wegfalls der Elemente für die Oelumlaufschmierung sowie aus der Lebensdauerschmierung, die die Wartungskosten erheblich senkt.

Es sind daher bereits Wälzlagerungen für Druckwellenlader vorgeschlagen worden, u. a. in den CH-Patentschriften 349 448, 351 141, 398 185 und 452 280. Diese Lagerungen verwenden hauptsächlich voluminöse Pendelrollenlager als Festlager, wobei als Loslager neben Pendelrollenlagern auch Zylinderrollenlager vorgesehen sind. Bei allen diesen Vorschlägen fehlen jedoch Vorkehrungen, die unbedingt erforderlich sind, um die Verrussungsgefahr des Schmierfettes auszuschalten, die durch die Druckdifferenz zwischen dem luftseitigen Nabenraum des Rotors und dem Wellenraum bedingt sind. Auch fehlen dabei Einrichtungen zur Kühlung der Wälzlager, bei denen sich wegen des wegfallenden Oelumlaufes beträchtliche Wärmemengen stauen, die wegen ihrer schädlichen Auswirkungen auf die Spiele im Lager und im Rotorgehäuse, möglichst unter Vermeidung einer thermodynamischen Verschlechterung des Druckwellenprozesses, weitgehend abgeführt werden müssen. Versuche haben auch gezeigt, dass Massnahmen erforderlich sind, die für einen dosierten, kontinuierlichen Fettnachschub aus dem Fettdepot in die Lager sorgen, wofür bei den erwähnten Patenten ebenfalls keine Vorkehrungen getroffen sind.

In der GB-A-1,125,472 wird vorgeschlagen, bei einer Druckwellenmaschine durch Einführen verdichteter Luft in eine Ringnut zwischen der Wälzlagerung und dem heissen Wellenraum eine Hitzebarriere zu erzeugen. Die Strömungsquerschnitte der dafür vorgesehenen Kanäle sind dabei aber konzeptionsbedingt im Verhältnis zu den Abmessungen der Lagerung klein, so dass es zweifelhaft ist, ob ihre Abschirmung gegen den Wärmefluss vom Wellenraum her wirksam genug ist.

Die vorliegende, im kennzeichnenden Teil des Patentanspruchs 1 definierte Erfindung entstand aus der Aufgabe, eine Wälzlagerung für Druckwellenlader zu entwickeln, deren Lagerelemente im wesentlichen wie gemäss der oben zitierten Ch-A-349 448 angeordnet sind, bei der jedoch die erwähnten Mängel der zitierten Patente vermieden sind, also namentlich eine wirksame Kühlung und Lebensdauerschmierung der Lager gewährleistet ist und darüber hinaus im Interesse kompakter Abmessungen des Laders die Lager auch wenig Einbauraum beanspruchen. Diesem Zweck dient insbesondere eine Lagerhülse, welche die Elemente des Festlagers gesamthaft aufnimmt und ihren Zusammenbau mit der Rotorwelle vor deren Einbau in das Rotorgehäuse ermöglicht.

Die Erfindung wird im folgenden anhand von Ausführungsbeispielen unter Bezugnahme auf die Zeichnungen näher beschrieben. In diesen stellen dar :

Figur 1 eine erste Ausführungsform der erfindungsgemässen Wälzlagerung mit einer Luftfördereinrichtung zur Wärmeabfuhr ;

Figur 1A in grösserem Massstab ein Detail aus Fig. 1 ;

Figur 2 eine Variante der Ausführungsform nach Fig. 1, wobei der Druckwellenprozess zur Lagerkühlung ausgenützt wird ;

Figur 3 ein Detail der Ausführungsform nach Fig. 2 ;

Figur 4 eine weitere Variante des Erfindungsgegenstandes ;

Figur 5 eine Rotorwelle mit der Lageranordnung gemäss Fig. 4, die

Figuren 6 und 7 Details zur Lageranordnung nach Fig. 4, die

Figuren 8 bis 11 Details zum System des Verrussungsschutzes gemäss der Erfindung, und die

Figur 12 eine Rotorwelle mit einem Wälzlager ohne Innen- und Aussenring.

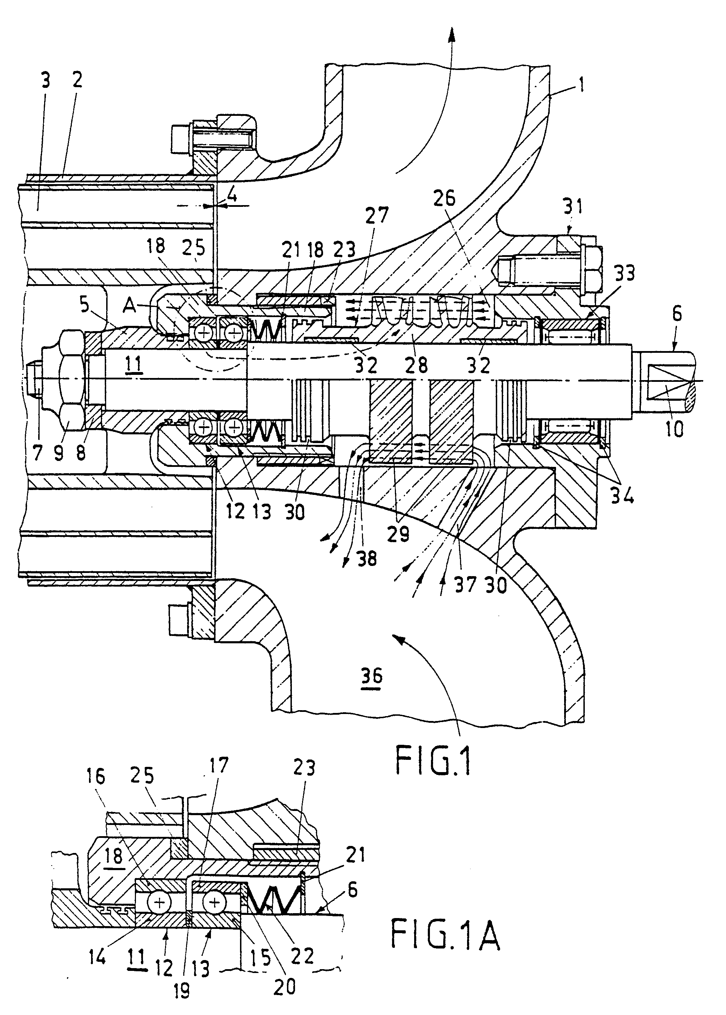

Die Fig. 1 zeigt den Ausschnitt aus einem Druckwellenlader, der die Lagerung der Rotorwelle enthält. Sie ist im Luftgehäuse 1 untergebracht. Der Gehäusemantel 2 umschliesst den zweiflutigen Rotor 3 mit geringem radialen Spiel. Das axiale Spiel, mit 4 bezeichnet, zwischen der Rotorstirnfläche und der Stirnfläche des Luftgehäuses 1 ist zur Verringerung von Leckverlusten sowohl im stationären Betriebszustand als auch während des Anfahrens möglichst klein zu halten, im letzteren Falle, um einen möglichst raschen Druckaufbau zu erreichen. Der Rotor ist mit seiner Nabe 5 am inneren Ende der Rotorwelle 6 befestigt, wozu ein in die Welle 6 eingeschraubter Schraubenbolzen 7, eine Scheibe 8 und eine Mutter 9 dienen, mit der die Nabe 5 axial verspannt wird. An ihrem äusseren Ende ist die Welle 6 mit einer Abflachung 10 versehen, die ein Verdrehen der nicht dargestellten Keilriemenscheibe zum Antrieb der Welle verhindert.

Die Festlagerung, siehe hiezu den vergrösserten Ausschnitt A in Fig. 1A, bilden zwei auf einem Wellenabsatz 11, der auch die Rotornabe 5 aufnimmt, sitzende Rillenkugellager 12, 13, deren zwei Innenringe 14 bzw. 15 durch die Mutter 9 über die Rotornabe 5 gegen die Schulter des Wellenabsatzes 11 verspannt sind. Der Aussenring 16 des inneren Kugellagers 12 sitzt fest in einer Lagerhülse 18, während der Aussenring 17 des Kugellagers 13 gegenüber der Bohrung dieser Lagerhülse 18 ein Spiel aufweist. Eine Distanzscheibe 19 zwischen den beiden Lagern 12 und 13 separiert die beiden Aussenringe 16, 17, so dass sich die Welle 6 gegenüber der Lagerhülse 18 frei ausdehnen kann. Für den Formschluss der Lagerelemente und damit für einen Spielausgleich bei wechselnden Temperaturen sorgen eine Scheibe 20, die am Aussenring 17 des Lagers 13 anliegt, ein Sprengring 21, der in einer Nut der Lagerhülse 18 sitzt, sowie eine zwischen der Scheibe 20 und dem Sprengring 21 eingespannte Tellerfedersäule 22.

Die Lagerhülse 18 ist im Luftgehäuse 1 durch einen auf einem Aussengewinde der Lagerhülse verschraubbaren Gewindering 23, der einen Distanzring 25 gegen das Gehäuse 1 verspannt, fixiert. Durch entsprechende Bemessung der Breite des Distanzringes 25 lässt sich der Rotor 3 so positionieren, dass das gewünschte Axialspiel zwischen den Stirnflächen des Rotors und des Luftgehäuses erreicht wird.

Die Welle 6 trägt im mittleren Bereich des Wellenraumes 26 eine Lüfterhülse 27, bestehend aus einem Nabenteil 28 und zwei Lüfterkränzen 29. Die beiden Enden des Nabenteils sind mit Labyrinthnuten 30 versehen, die Drosselspalte gegenüber der Bohrung der Lagerhülse 18 und einer Bohrung in einem Lagerflansch 31 bilden. Für die Fixierung der Lüfterhülse 27 dienen zwei sogenannte Toleranzringe 32, das sind Blechhülsen mit über den Umfang verteilten Längssicken, die beim Einbau an der Welle und an der Bohrung verformt werden. Der Lagerflansch 31 nimmt ein innenringloses Nadellager 33 auf, welches als Loslager dient und die freie axiale Ausdehnbarkeit der Welle 6 erlaubt. Die Längsverschieblichkeit des Aussenringes des Nadellagers ist auf bekannte Weise durch zwei Sprengringe 34 begrenzt, die Nadeln des Lagers laufen direkt auf der Welle 6.

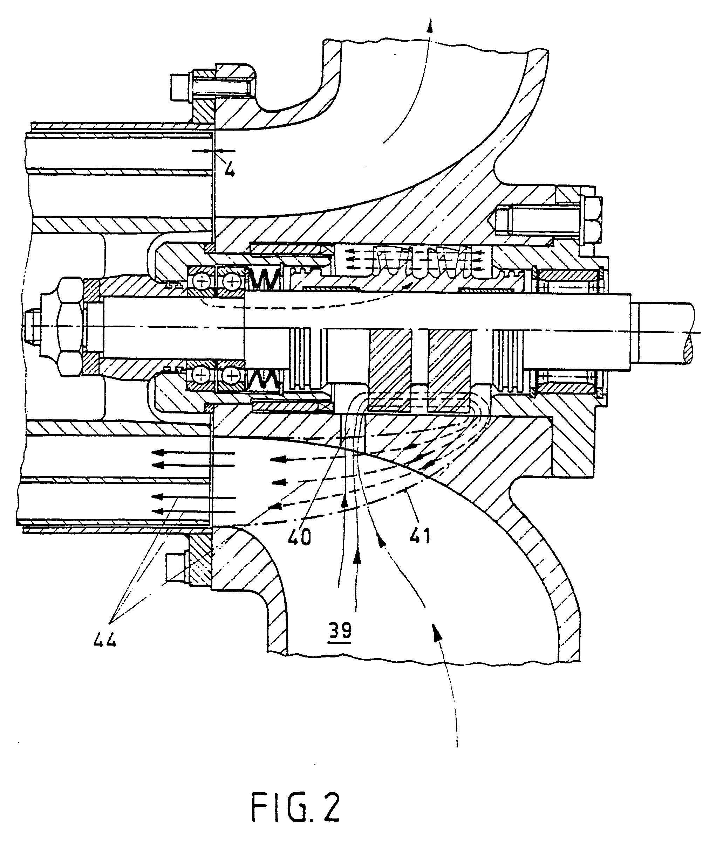

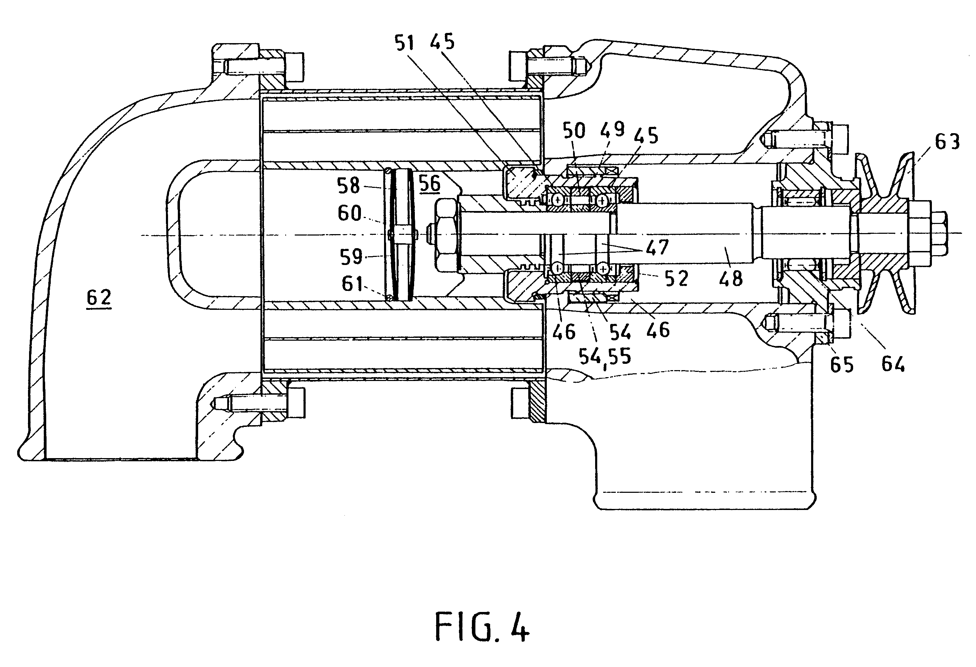

Vom Ansaugkanal 36 des Luftgehäuses 1 zweigt mindestens ein Einströmkanal 37 in den Wellenraum 26 ab und es mündet mindestens ein Ausströmkanal 38 aus dem Wellenraum in den Ansaugkanal 36 ein. Der Kanal 37 zweigt einen kleinen Teil der Ansaugluft zwecks Kühlung der Lagerung in den Wellenraum ab, wobei das Einströmen zusätzlich zum Staudruck von den schräg beschaufelten Lüfterkränzen 29 unterstützt wird. Die erwärmte Luft gelangt durch den Kanal 38 wieder in den Ansaugkanal 36 zurück. Die Lüfterkränze nach den Fig. 1 und 2 sind in Form von Schraubenrädern ausgeführt, die eine grössere Wärmeaustauschfläche bieten als geradverzahnte Räder, die grundsätzlich aber ebenfalls geeignet sind.

Weitere Erklärungen zu den Massnahmen bezüglich der Dauerschmierung und zur Verhinderung des Eindringens von Russ in die Lagerung folgen später.

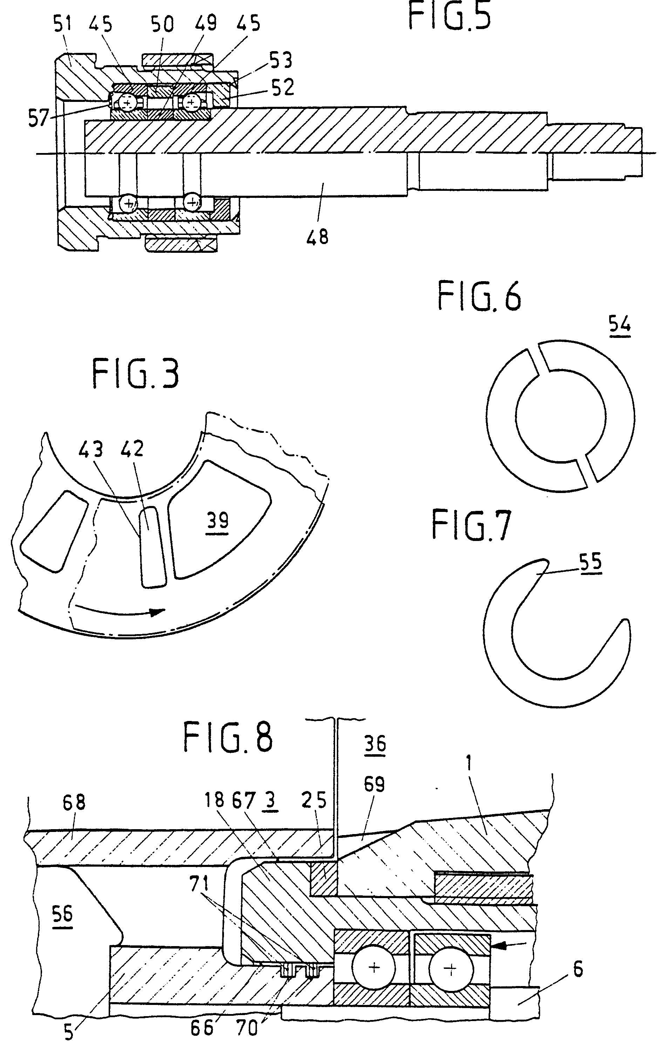

Die Ausführung nach Fig. 2 entspricht bezüglich der Lagerungselemente der in Fig. 1 gezeigten Ausführung, unterscheidet sich von dieser jedoch durch ein wirksameres Belüftungssystem für den Wellenraum. Dabei erfolgt die Zufuhr von Ansaugluft wiederum aus dem Ansaugkanal 39 durch mindestens einen Einströmkanal 40. Der Wellenraum steht darüber hinaus mit einem schlitzförmigen Saugkanal 41 in Verbindung, dessen Kontur strichpunktiert eingezeichnet ist, da er sich in einer Ebene vor dem Ansaugkanal befindet. Er mündet mit dem in Fig. 3 eingezeichneten Querschnitt 42 in den Rotorraum. Sobald eine der im allgemeinen radial verlaufenden Zellenwände des Rotors die Oeffnungskante 43 des Saugkanals 41 passiert, entsteht in diesem ein Unterdruck, da in der betreffenden Rotorzelle ebenfalls ein Unterdruck herrscht, der die durch die Pfeile 44 angedeutete Strömung in die Rotorzellen hinein bewirkt.

Der in Fig. 4 dargestellte Druckwellenlader unterscheidet sich von den in den Fig. 1 und 2 gezeigten im wesentlichen durch eine andere Ausführung der Kugellagerung. Für die Belüftung des Wellenraumes sind die gleichen, hier aber nicht dargestellten Mittel wie bei der Ausführung nach der Fig. 1 oder 2 vorgesehen.

Die Lagerung dieser Variante, die in Fig. 5 in grösserem Massstab dargestellt ist, weist zwei Schrägkugellager 45 bzw. 46 auf, die neben Querkräften auch verhältnismässig grosse Axialkräfte aufzunehmen imstande sind. Die in der oberen Hälfte der Fig. 4 dargestellten Lager 45 sind solche mit Innenringen, wogegen in der unteren Hälfte Lager 46 ohne Innenringe vorgesehen sind, bei denen die Kugelkränze auf geschliffenen Laufrillen 43 der Rotorwelle 48 laufen. Die Ausführung mit Innenring des Lagers 45 weist sowohl zwischen den beiden Innenringen als auch zwischen den beiden Aussenringen je einen Distanzring 49 bzw. 50 auf, die im kalten Zustand des Laders zwischen den Innenringen bzw. Aussenringen axial verspannt sind. Weil sich die Innenringe der Lager im Betrieb stärker erwärmen als die Aussenringe, dehnen sie sich auch stärker aus als diese, was eine Aenderung der Kontaktwinkel und damit eine axiale Verschiebung der Laufringe relativ zueinander zur Folge hat. Unter dem Kontaktwinkel ist der Winkel zu verstehen, den die Verbindungslinie der Berührungspunkte der Kugeln mit den beiden Laufringen, beispielsweise mit der Wellenachse, einschliesst. Auf diese Weise stellt sich im betriebswarmen Zustand das für einen einwandfreien Lauf und die richtige Positionierung des Rotors im Gehäusemantel erforderliche Axialspiel ein. Zur axialen Sicherung der Lager 45 in der Lagerhülse 51 dient ein Haltering 52, der durch einen Bördel 53 am inneren Rand der rechten Stirnseite der Lagerhülse 51, siehe Fig. 5, oder durch Verstemmen an einigen über den Umfang verteilten Stellen dieser Stirnseite fixiert ist.

In der oberen Hälfte der Fig. 5 ist die Lagerung mit kompletten Schrägkugellagern, also solchen mit Innen- und Aussenring, dargestellt. Die untere Hälfte dieser Figur zeigt die Lagerung mit Schrägkugellagern ohne Innenringe.

Bei der in den Fig. 4 bzw. 5 in der unteren Hälfte gezeigten Lagerung mit Schrägkugellagern ohne Innenring ist es nicht möglich, die Lagerung als komplette, einbaufertige, in die Lagerhülse 51 eingebördelte Einheit von der Welle separiert für die Montage vorzubereiten. Hier muss vielmehr zunächst das eine der beiden Lager auf bekannte Weise — Aufschieben des Kugelkranzes mit den radial nach auswärts beweglichen Kugeln auf die Rille, radiales Eindrücken der Kugeln und Darüberschieben des Aussenringes — auf die Welle montiert werden, sodann der zweite Aussenring aufgeschoben, der zugehörige Kugelkranz in die Laufrille eingerastet und der zweite Aussenring über die Kugeln geschoben werden. Sodann ist der Abstand der einander zugekehrten Stirnseiten der Aussenringe zu messen und ein geteilter Distanzring 54 nach Fig. 6 oder ein hufeisenförmiger Distanzring 55 nach Fig. 7 einzusetzen, deren Breite gleich dem gemessenen Abstand ist. Sodann kann erst die Lagerhülse 51 über dieses aus Welle und Lagern bestehende Ensemble geschoben und diesem gegenüber mittels eines oben erwähnten Halteringes 52 und eines Bördels 53 der Lagerhülse axial fixiert werden.

Gegen den luftseitigen Nabenraum 56 des Rotors ist die Lagerung durch eine aus Fig. 5 ersichtliche Dichtscheibe 57 abgedeckt, die das Verschmutzen der Lager durch aus dem Abgas eventuell in die Luft gelangenden Russ verhindern soll.

Gegen Wärmestrahlung und Verschmutzung aus dem abgasseitigen Teil der Rotorzellen durch die Rotornabe hindurch ist die Lagerung durch einen Deckel 58 geschützt, der zwei federnde Scheiben 59, vorzugsweise aus Blech, aufweist, die auf einen Distanzbolzen 60 aufgenietet sind. Durch einen Sprengring 61 wird der Deckel 58 unter axialer Vorspannung gehalten und gesichert. Das Gasgehäuse ist in der Fig. 4 mit 62 bezeichnet.

Für die Lagerung auf der Seite der Keilriemenscheibe 63 kann, wie in der oberen Hälfte der Fig. 4 dargestellt, ein gleiches Nadellager wie bei den Ausführungen nach den Fig. 1 und 2 verwendet werden, oder aber es können, um Einbauraum zu sparen, Nadeln 64 allein verwendet werden, was neben einer entsprechend fein bearbeiteten Wellenzapfenoberfläche, wie sie auch für die obenerwähnten Nadellager Voraussetzung ist, eine gehärtete und geschliffene Bohrung im Lagerflansch 65 verlangt.

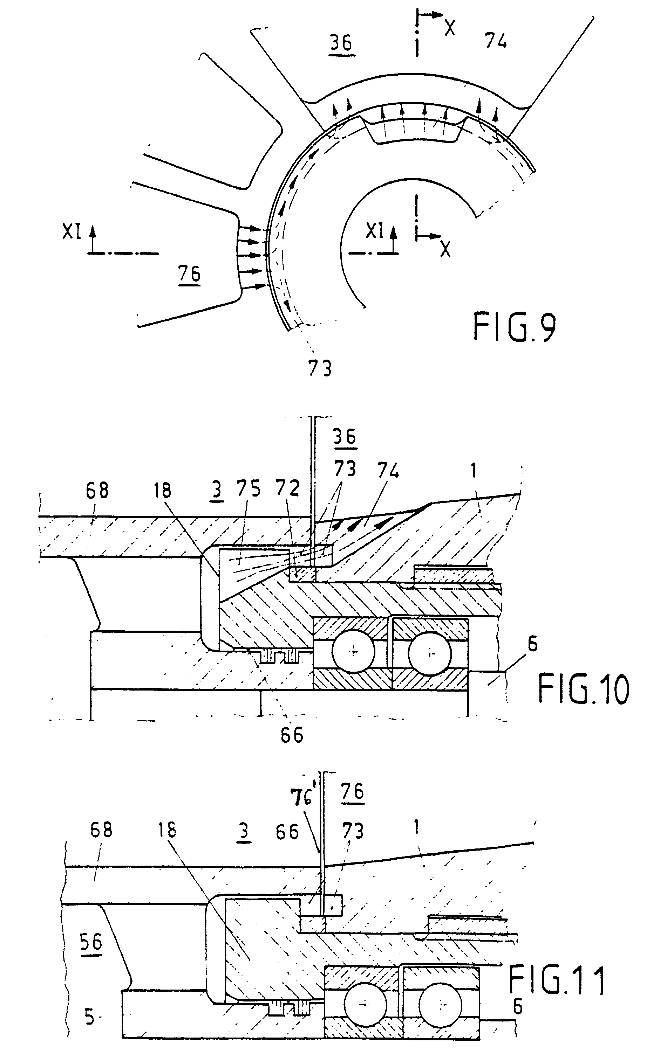

Die Massnahmen, mit denen das Eindringen von Russ aus verunreinigter Luft aus dem Luftgehäuse in die Lagerung verhindert wird, bestehen darin, dass eine Verbindung des Wellenraumes 26 mit dem Ansaugkanal 36 des Luftgehäuses über den luftseitigen Nabenraum des Rotors hergestellt wird, wie die Fig. 8 zeigt, oder zusätzlich gemäss einer in den Fig. 9-11 dargestellten Ausführung eine Verbindung vom Hochdruckluftkanal 76 zum Ansaugkanal 36 vorgesehen ist.

Bei der Ausführung nach Fig. 8 steht der Wellenraum über einen inneren Ringraum 66 zwischen Rotornabe 5 und Lagerhülse 18, dem luftseitigen Nabenraum 56, einen äusseren Ringraum 67 zwischen der Lagerhülse 18 und dem Nabenrohr 68 des Rotors sowie je einen breiten, schräg bis auf den Aussendurchmesser des Distanzringes 25 hinunter verlaufenden Ausgleichsschlitz 69 im Bereich der beiden Ansaugkanäle 36 mit den letzteren in leitender Verbindung, um einen Sog aus dem Wellenraum heraus zu erzeugen. Als körperliches Hindernis gegen das Eindringen von Russpartikeln in den Wellenraum können im inneren Ringraum 66 Ringnuten 70 zur Aufnahme von Labyrinthringen 71 vorgesehen sein. Bei diesen handelt es sich um mit kleiner Steigung schraubenförmig, ähnlich Schlüsselringen, gewickelte dünne Bleche, die sich nach dem Einbau nach aussen spreizen, demnach in der Lagerhülse festsitzen und so ein Labyrinth bilden.

Die Fig. 9 bis 11 stellen eine modifizierte Ausführung dieses Systems dar. Fig. 9 ist eine Draufsicht auf die Hochdruckluft- und Ansaugkanäle, vom Rotor her gesehen, wobei jeweils nur einer der Kanäle gezeichnet ist, die Fig. 10 und 11 sind in grösserem Massstab Schnitte entsprechend den in Fig. 9 eingetragenen Schnittverläufen X-X und XI-XI.

Bei dieser Ausführung ist der äussere Ringraum auf Kosten der radialen Breite des Distanzringes 72 zu einem Ringkanal 73 erweitert, der sich auch in das Luftgehäuse 1 hinein erstreckt. Neben den Ausgleichsschlitzen 74 im Bereich der Ansaugkanäle 36 sind solche, mit 75 bezeichnete, auch in der Lagerhülse 18 vorgesehen. Der Ringkanal 73, der sich über den ganzen Umfang erstreckt, entlüftet die Verbindung (Spalt 76) mit den beiden Hochdruckluftkanälen 76 deren Leck-Strom somit in die Ansaugkanäle 36 übergeht. Eventuell verunreinigte Hochdruckluft, die sonst durch den Axialspalt in den Wellenraum gelangen könnte, wird damit am Eindringen in den letzteren gehindert.

Ein weiterer wichtiger Vorteil, der durch den auf diese Weise erzeugten Sog aus dem Wellenraum erreicht wird, besteht in einem selbsttätigen, gering dosierten Nachschub von Schmierfett aus den Fettdepots im Wellenraum zu den Lagern, wodurch eine der eingangs erwähnten Aufgaben dieser Erfindung gelöst wird.

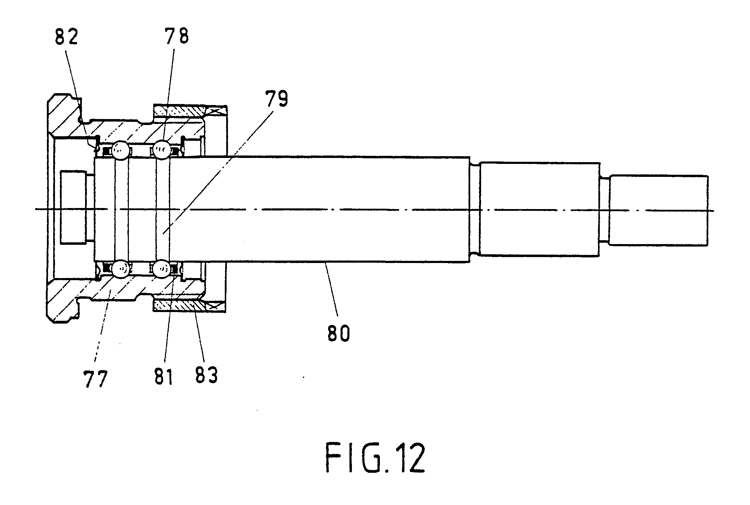

Eine Kugellagerung, die einen besonders kleinen Wellenraum erlaubt und damit insgesamt zu einem kompakteren Druckwellenlader führt, ist in Fig. 12 dargestellt. Bei diesem Lager dient eine Lagerhülse 77 mit Kugellaufrillen 78 als Kugellageraussenring, während Kugellaufrillen 79 auf der Welle 80 den Innenring ersetzen. Nach dem Einfüllen der Kugeln in bekannter Weise zwischen Welle und Lagerhülse werden die Kugeln mit gleichen Umfangsabständen separiert und durch Schnappkäfige 81 aus hochtemperaturfestem, faserverstärktem Kunstharz fixiert. Dichtscheiben 82 mit geringem Spiel gegenüber der Welle 80 schliessen eine Fettdauerfüllung gegen aussen ab und ein Gewindering 83 dient wie oben beschrieben zur axialen Befestigung der Lagerhülse 77 im Wellenraum des Luftgehäuses.

## Patentansprüche

1. Druckwellenlader mit Wälzlagerung des Rotors, wobei die Wälzlagerung ein Festlager und ein Loslager aufweist und im Luftgehäuse untergebracht ist, das Festlager der Rotornabe benachbart ist und aus zwei Wälzlagern besteht, und wobei das Loslager der Antriebsriemenscheibe benachbart ist und aus einem Nadellager besteht, dadurch gekennzeichnet, dass der Wellenraum (26), der die Lager enthält, über Kanäle (37, 38 ; 40, 41 ; 66 56, 67, 69 ; 66, 56, 75, 73, 74) mit den Luftansaugkanälen (36 ; 39) im Luftgehäuse (1) verbunden ist, dass die Wälzlager des Festlagers in einer Lagerhülse (18 ; 51) sitzen oder mit einer solchen einteilig ausgebildet sind (77, Fig. 12), und dass diese Lagerhülse im Luftgehäuse in Längsrichtung der Rotorwelle (6 ; 48) starr fixiert ist.

2. Druckwellenlader nach Anspruch 1, dadurch gekennzeichnet, dass das Festlager aus zwei Kugellagern (12, 13 ; 45 ; 46 ; 77) besteht.

3. Druckwellenlader nach Anspruch 2, dadurch gekennzeichnet, dass die Kanäle, die den Wellenraum (26) mit den Luftansaugkanälen (36) verbinden, für jeden Luftansaugkanal aus je einem Einströmkanal (37) an einer vorderen Stelle des Luftansaugkanals (36) und einem, in der Strömungsrichtung der Ansaugluft gesehen, hinter diesem Einströmkanal (37) liegenden Ausströmkanal (38) bestehen, wobei der Ausströmkanal (38) nahe vor der Eintrittsstelle der Ansaugluft in den Rotor (3) in den Luftansaugkanal (36) einmündet, und dass der Aussenring des dem Rotor (3) zugewandten Kugellagers (12) mit einem Festsitz und der Aussenring des der Antriebsriemenscheibe (63) zugewandten Lagers (13) axialverschieblich in der Lagerhülse (18) sitzt.

4. Druckwellenlader nach Anspruch 1, dadurch gekennzeichnet, dass die Kanäle, die den Wellenraum mit den Luftansaugkanälen (39) verbinden, für jeden Luftansaugkanal aus je einem Einströmkanal (40) zwischen dem Luftansaugkanal (39) und dem Wellenraum sowie aus je einem Saugkanal (41) zwischen dem Wellenraum und dem Rotorgehäuse bestehen, wobei der Saugkanal (41) an einer Stelle (42) in den Rotorraum einmündet, die, in Drehrichtung des Rotors gesehen, unmittelbar vor der Einmündung des Luftansaugkanals (39) in dem Rotorraum liegt.

5. Druckwellenlader nach einem der Ansprüche 1 bis 4, gekennzeichnet durch eine auf der Rotorwelle (6) sitzende Lüfterhülse (27) mit zwei Lüfterkränzen (29) zur Erhöhung der Geschwindigkeit des den Wellenraum durchströmenden Anteils der Ansaugluft.

6. Druckwellenlader nach Anspruch 1 oder 5, dadurch gekennzeichnet, dass die Kanäle zur Verbindung des Wellenraumes mit den Luftansaugkanälen (36) aus einem inneren Ringraum (66) zwischen der Rotornabe (5) und der Lagerhülse (18), dem luftseitigen Nabenraum (56) innerhalb des Nabenrohres (68), einem äusseren Ringraum (67) oder einem Ringkanal (73), Ausgleichsschlitzen (75) in der Lagerhülse (18) und/oder Ausgleichsschlitzen (74 bzw. 69) im Luftgehäuse (1) bestehen.

7. Druckwellenlader nach Anspruch 6, dadurch gekennzeichnet, dass Leckagen (Spalt 76') der Hochdruckluftkanäle (76) über den Ringkanal (73) in der Luftansaugkanal (36) entlüftet sind.

8. Druckwellenlader nach Anspruch 2, dadurch gekennzeichnet, dass die Innenringe (14 ; 15) der beiden Kugellager (12 ; 13) des Festlagers mit Festsitz auf der Welle (11) sitzen und durch einen Distanzring (19) axial voneinander separiert sind, dass der Aussenring (16) des rotornahen Kugellagers (12) mit Festsitz in der Lagerhülse (18) sitzt, dass der Aussenring (17) des zweiten Kugellagers (13) gegenüber der Lagerhülse (18) ein Spiel aufweist, und dass der Aussenring (17) des zweiten Kugellagers (13) durch federnde Mittel (22) in axialer Richtung belastet ist.

9. Druckwellenlader nach Anspruch 2, dadurch gekennzeichnet, dass das Festlager zwei Schrägkugellager (45) aufweist, deren Aussenringe mit Festsitz in der Lagerhülse (51) sitzen, dass die Innenringe der beiden Schrägkugellager durch einen inneren Distanzring (49) und die Aussenringe der beiden Schrägkugellager durch einen äusseren Distanzring (50) voneinander distanziert sind, und dass die beiden Schrägkugellager (45) durch einen Haltering (52) und einen Bördel (53) an der Lagerhülse (51) axial in dieser Lagerhülse gesichert sind.

10. Druckwellenlader nach Anspruch 2, dadurch gekennzeichnet, dass das Festlager zwei Schrägkugellager (46) ohne Innenring aufweist, dass die Rotorwelle (48) Laufrillen (47) für die Lagerkugeln aufweist, dass die Aussenringe der beiden Schrägkugellager (46) mit Pressitz in der Lagerhülse (51) sitzen, dass zwischen den beiden Aussenringen ein geteilter Distanzring (54) oder ein hufeisenförmiger Distanzring (55) vorgesehen ist, und dass die beiden Schrägkugellager (46) durch einen Haltering (52) und einen Bördel (53) an der Lagerhülse (51) axial in dieser Lagerhülse gesichert sind.

11. Druckwellenlader nach Anspruch 2, dadurch gekennzeichnet, dass das Festlager aus zwei in Schnappkäfigen (81) fixierten und voneinander separierten Kugelreihen besteht, deren innere Laufrillen (79) in der Welle (80) und deren äussere Laufrillen (78) in der Lagerhülse (77) vorgesehen sind.

12. Druckwellenlader nach Anspruch 1, gekennzeichnet durch einen innerhalb der Rotornabe vorgesehenen Strahlungs- und Verrussungsschutz, bestehend aus einem Deckel (58) mit zwei federnden Blechscheiben (59) und einem Distanzbolzen (60) sowie einem Sprengring (61) zu axialen Sicherung des Deckels (58) in der Rotornabe.

**Claims**

1. Pressure-wave supercharger with rolling bearing of the rotor, the rolling bearing having a fixed bearing and a movable bearing and being accommodated in the air casing, the fixed bearing being located next to the rotor hub and consisting of two roller bearings, and the movable bearing being located next to the drive belt pulley and consisting of a needle bearing, characterized in that the shaft space (26) containing the bearing is connected via ducts (37, 38 ; 40, 41 ; 66, 56, 67, 69 ; 66, 56, 75, 73, 74) to the air intake ducts (36 ; 39) in the air casing (1), in that the roller bearings of the fixed bearing are seated in a bearing sleeve (18 ; 51) or are designed integrally with such a bearing sleeve (77, Fig. 12), and in that this bearing sleeve is rigidly fixed in longitudinal direction of the rotor shaft (6 ; 48) in the air casing.

2. Pressure-wave supercharger according to Claim 1, characterized in that the fixed bearing consists of two ball bearings (12, 13 ; 45 ; 46 ; 77).

3. Pressure-wave supercharger according to Claim 22, characterized in that the ducts which connect the shaft space (26) to the air intake ducts (36) each consist of an inflow duct (37) at a forward position of the air intake duct (36) and an outflow duct (38) downstream of this inflow duct (37), seen in the direction of flow of the intake air, for each air intake duct, the outflow duct (38) opening out into the air intake duct (36) just before the entry point of the intake air into the rotor (3), and in that the outer race of the ball bearing (12) turned toward the rotor (3) is seated with a firm fit and the outer race of the bearing (13) turned toward the drive belt pulley (63) is seated axially displaceably in the bearing sleeve (18).

4. Pressure-wave supercharger according to Claim 1, characterized in that the ducts which join the shaft space to the air intake ducts (39) each consist of an inflow duct (40) between the air intake duct (39) and the shaft space and a suction duct (41) between the shaft space and the rotor casing for each air intake duct, the suction duct (41) opening out into the rotor space at a point (42) which lies directly upstream of the opening of the air intake duct (39) in the rotor space, seen in the direction of rotation of the rotor.

5. Pressure-wave supercharger according to one of Claims 1 to 4, characterized by a fan sleeve (27), seated on the rotor shaft (6) and with two fan impellers (29) for increasing the speed of the proportion of intake air flowing through the shaft space.

6. Pressure-wave supercharger according to Claim 1 or 5, characterized in that the ducts for connection of the shaft space to the air intake ducts (36) consist of an inner annular space (66) between the rotor hub (5) and the bearing sleeve (18), the air-side hub space (56) within the tubular hub (68), an outer annular space (67) or an annular duct (73), compensating slits (75) in the bearing sleeve (18) and/or compensating slits (74 and 69) in the air casing (1).

7. Pressure-wave supercharger according to Claim 6, characterized in that leaks (gap 76') of the high-pressure air ducts (76) are vented via the annular duct (73) into the air intake duct (36).

8. Pressure-wave supercharger according to Claim 2, characterized in that the inner races (14 ; 15) of the two ball bearings (12 ; 13) of the fixed bearing are seated with firm fit on the shaft (11) and are separated axially from each other by a spacer ring (19), in that the outer race (16) of the ball bearing (12) close to the rotor is seated with firm fit in the bearing sleeve (18), in that the outer race (17) of the second ball bearing (13) has a clearance with respect to the bearing sleeve (18), and in that the outer race (17) of the second ball bearing (13) is loaded in axial direction by resilient means (22).

9. Pressure-wave supercharger according to Claim 2, characterized in that the fixed bearing has two angular ball bearings (45), the outer races of which are seated with firm fit in the bearing sleeve (51), in that the inner races of the two angular ball bearings are spaced apart by an inner spacer ring (49) and the outer races of the two angular ball bearings are spaced apart by an outer spacer ring (50), and in that the two angular ball bearings (45) are secured axially in this bearing sleeve by a retaining ring (52) and a flange (53) on the bearing sleeve (51).

10. Pressure-wave supercharger according to Claim 2, characterized in that the fixed bearing has two angular ball bearings (46) without inner race, in that the rotor shaft (48) has channels (47) for the bearing balls, in that the outer races of the two angular ball bearings (46) are seated with press fit in the bearing sleeve (51), in that a split spacer ring (54) or a horseshoe-shaped spacer ring (55) is provided between the two outer races, and in that the two angular ball bearings (46) are secured axially in this bearing sleeve by a retaining ring (52) and a flange (53) on the bearing sleeve (51).

11. Pressure-wave supercharger according to Claim 2, characterized in that the fixed bearing consists of two rows of balls fixed in snap cages (81) and separated from one another, whose inner channels (79) are provided in the shaft (80) and whose outer channels (78) are provided in the bearing sleeve (77).

12. Pressure-wave supercharger according to Claim 1, characterized by a radiation and sooting guard provided within the rotor hub, consisting of a cover (58) with two resilient sheet metal discs (59) and a spacer bolt (60) as well as a snap ring (61) for axial securing of the cover (58) in the rotor hub.

## Revendications

1. Machine de suralimentation à ondes de pression avec un rotor monté sur des paliers à roulement, dans laquelle les paliers comprennent un palier fixe et un palier libre et sont montés dans le carter à air, où le palier fixe est voisin du moyeu du rotor et se compose de deux paliers à roulement et où le palier libre est voisin de la poulie à courroies d'entraînement et se compose d'un roulement à aiguilles, caractérisée en ce que la chambre d'arbre (26), qui contient les paliers, est en communication avec les canaux (36 ; 39) d'aspiration d'air ménagés dans le carter à air (1), par l'intermédiaire de canaux (37, 38 ; 40, 41 ; 66, 56, 67, 69), en ce que les paliers à roulement du palier fixe sont montés dans une douille de palier (18 ; 51) ou sont formés d'une seule pièce avec une telle douille (77, Fig. 12), et en ce que cette douille de palier est fermement fixée dans le carter à air suivant la direction longitudinale de l'arbre, (6 ; 48) du rotor.

2. Machine de suralimentation à ondes de pression suivant la revendication 1, caractérisée en ce que le palier fixe se compose de deux roulements à billes (12, 13 ; 45, 46 ; 77).

3. Machine de suralimentation à ondes de pression suivant la revendication 2, caractérisée en ce que les canaux, qui relient la chambre d'arbre (26) aux canaux (36) d'aspiration d'air, se composent, pour chaque canal d'aspiration d'air, d'un canal d'admission (37) en un point antérieur du canal (36) d'aspiration d'air et d'un canal d'évacuation (38) situé après ce canal d'admission (37), dans le sens de circulation de l'air aspiré, le canal d'évacuation (38) débouchant dans le canal (36) d'aspiration d'air un peu avant le point d'entrée de l'air aspiré dans le rotor (3) et en ce que la bague extérieure du roulement à billes (12) proche du rotor (3) est posée à frottement dur et la bague extérieure du roulement (13) proche de la poulie (63) à courroies d'entraînement peut coulisser axialement dans la douille de palier (18).

4. Machine de suralimentation à ondes de pression suivant la revendication 1, caractérisée en ce que les canaux, qui relient la chambre d'arbre aux canaux (39) d'aspiration d'air, se composent, pour chaque canal d'aspiration d'air, d'un canal d'admission (40) entre le canal (39) d'aspiration d'air et la chambre d'arbre ainsi que d'un canal (41) d'aspiration entre la chambre d'arbre et le carter du rotor, le canal d'aspiration (41) débouchant dans la chambre de rotor en un point (42) qui, vu dans le sens de rotation du rotor, est situé immédiatement avant la sortie du canal (39) du canal d'aspiration d' air.

5. Machine de suralimentation à ondes de pression suivant une des revendications 1 à 4, caractérisée par un manchon (27) de ventilateur monté sur l'arbre (6) du rotor, avec deux couronnes (29) pour augmenter la vitesse de la portion de l'air d'aspiration qui traverse la chambre d'arbre.

6. Machine de suralimentation à ondes de pression suivant la revendication 1 ou 5, caractérisée en ce que les canaux de liaison de la chambre d'arbre avec les canaux (36) d'aspiration d'air se composent d'une chambre annulaire intérieure (66) entre le moyeu (5) du rotor et la douille de palier (18), de la chambre (56) située du côté air à l'intérieur du tube (68) du moyeu, d'une chambre annulaire extérieure (67) ou d'un canal annulaire (73), de fentes de compensation (75) dans la douille de palier (18) et/ou de fentes de compensation (74 respectivement 69) dans le carter à air (1).

7. Machine de suralimentation à ondes de pression suivant la revendication 6, caractérisée en ce que les fuites (fente 76') des canaux (76) à air à haute pression sont évacuées par le canal annulaire (73) dans le canal (36) d'aspiration d'air.

8. Machine de suralimentation à ondes de pression suivant la revendication 2, caractérisée en ce que les bagues intérieures (14 ; 15) des deux roulements à billes (12 ; 13) du palier fixe sont montées à frottement dur sur l'arbre (11) et sont séparées axialement l'une de l'autre par une bague d'écartement (19), en ce que la bague extérieure (16) du roulement à billes (12) proche du rotor est montée à frottement dur dans la douille de palier (18), en ce que la bague extérieure (17) du second roulement à billes (13) présente un jeu par rapport à la douille de palier (18), et en ce que la bague extérieure (17) du second roulement à billes (13) est sollicitée en direction axiale par des moyens élastiques (22).

9. Machine de suralimentation à ondes de pression suivant la revendication 2, caractérisée en ce que le palier fixe comprend deux roulements à billes (45) à contact oblique, dont les bagues extérieures sont montées à frottement dur dans la douille de palier (51), en ce que les bagues intérieures des deux roulements à billes à contact oblique sont séparées par une bague d'écartement intérieure (49) et les bagues extérieures des deux roulements à billes à contact oblique sont séparées par une bague d'écartement extérieure (50), et en ce que les deux roulements à billes (45) à contact oblique sont fixés axialement dans cette douille de palier (51) par une bague de maintien (52) et un bourrelet (53) garnissant la douille de palier (51).

10. Machine de suralimentation à ondes de pression suivant la revendication 2, caractérisée en ce que le palier fixe comprend deux roulements à billes (46) à contact oblique sans bague intérieure, en ce que l'arbre (48) du rotor présente des gorges de roulement (47) pour les billes des roulements, en ce que les bagues extérieures des deux roulements à billes (46) à contact oblique sont montées à frottement dur dans la douille de palier (51), en ce qu'il est prévu entre les deux bagues extérieures une bague d'écartement (54) en plusieurs parties ou une bague d'écartement (55) en forme de fer à cheval, et en ce que les deux roulements à billes (46) à contact oblique sont fixés axialement dans cette douille de palier par une bague de maintien (52) et un bourrelet (53) garnissant la douille de palier (51).

11. Machine de suralimentation à ondes de pression suivant la revendication 2, caractérisée en ce que le palier fixe se compose de deux rangées de billes fixées dans des cages élastiques (81) et séparées l'une de l'autre, dont les gorges de roulement intérieures (79) sont ménagées dans l'arbre (80) et dont les gorges de roulement extérieures (78) sont ménagées dans la douille de palier (77).

12. Machine de suralimentation à ondes de pression suivant la revendication 1, caractérisée par une protection contre le rayonnement et contre l'encrassement par la suie prévue à l'intérieur du moyeu du rotor, se composant d'un couvercle (58) avec deux disques élastiques (59) en tôle et d'un goujon d'écartement (60) ainsi qu'un d'un jonc (61) assurant la fixation axiale du couvercle (58) dans le moyeu du rotor.

FIG.1

FIG.1A

FIG. 2

FIG. 4

0 087 834

FIG.5

51 45 50 49 45
53
52
57
48

FIG.6
54

FIG.3

43 42
39

FIG.7
55

FIG.8
36
69
1
18 67 3 25
68
71
56
6
5
66 70

0 087 834

FIG.9

FIG.10

FIG.11

FIG.12